# EUROPEAN PATENT SPECIFICATION

(11) **EP 4 468 050 B1**
(45) Date of publication and mention of the grant of the patent: **14.01.2026**
(21) Application number: 24177374.6
(22) Date of filing: 22.05.2024
(51) Int. Cl.: G02B 7/00, F21V 13/08, F21V 14/08, G02B 26/00, F21S 10/00, F21V 17/00, F21W 131/406, F21V 17/10

(54) **A LENS UNIT FOR OPTICAL EFFECTS**
EINE LINSENEINHEIT FÜR OPTISCHE EFFEKTE
UNE UNITÉ D'UNE LENTILLE POUR UN EFFET OPTIQUE

(30) Priority: 24.05.2023 IT 202300010509
(43) Date of publication of application: 27.11.2024
(73) Proprietor: Music & Lights S.r.l., 04026 Minturno Latina (IT)
(72) Inventor: DI FUSCO, Matteo Luciano, 04022 Fondi (Latina) (IT); GABRIELLI, Andrea, 47924 Rimini (IT)
(74) Representative: Milli, Simone

(56) References cited:
- EP-B1- 2 414 726
- KR-B1- 101 719 300
- US-A1- 2007 211 475

## Description

This invention relates to a lens unit for optical effects on projectors generating a light beam.

One of the uses of the light beam projector may be, for example, but without restricting the scope of the invention, the lighting of areas dedicated to artistic events, such as theatre productions and concerts, or sports events, both outdoors and indoors.

Obviously, this projector may also be used for other types of use, without thereby limiting the scope of protection of this invention.

There are various types of projectors on the market designed for the above-mentioned uses, structured in such a way as to emit various types of light beams.

There are projectors which are able to emit directed light beams, light beams modulated in amplitude, intensity, colouring and combined with optical effects which are able to obtain on the light beam, for example, designs and patterns.

In their more general form, these projectors comprise a containment and support frame (or shell), having a main extension along the axis of emission of the light beam and containing inside it at least the following components: a controlled source of a light beam (for example LED type sources) at a first end of the frame, and an optical unit for the controlled output of the light beam.

According to a solution of particular relevance to this invention, in addition to the above-mentioned list of components, groups of lenses may be added with the purpose of creating the effects of images (dichroic gobos) or colours (dichroic filters) to be positioned inside the body of the projector along the trajectory of the light beam.

Each lens unit comprises a holder having a seat (slot) in which to install a single dichroic filter (colour or gobos).

Some examples of this type of projector are known from patent documents KR 101 719 300, US 2007/211475 and EP 2 414 726.

Currently, in order to be able to install these individual units in the projectors each individual holder is inserted and stably fixed inside the projector in such a way as to position the filter along the trajectory of the light beam.

These units can be replaced or adjusted only by means of their mechanical disassembly from the body of the projector and performing the operation from the outside, most often with specific working tools.

This procedure usually requires opening the projector body to pick up the holders, performing the change or adjustment operation of the dichroic filters and then re-inserting the holders and closing the projector body again.

If the filter unit containing an image (gobo) is installed in the projector body in an undesired position, it is necessary to reopen the projector body and re-install the unit inside the projector body in the new position.

As may be already inferred from the above description, the current filter units (both colour and gobo) have drawbacks.

The structure of the filter units has an assembly and an adjustment on the projector which is extremely complex and laborious and without being able to have the certainty of the correct position of the image of the gobo filter which, in effect, forces the operator to carry out a further operation for removal and reassembly of the filter.

In addition, there is the problem of any correct centring, during assembly, between the image filter and the colour filter positioned one after the other relative to the outlet direction of the light beam, but physically separated from each other.

In this case, too, an incorrect relative positioning between the two filters or with respect to the projected light beam further necessitates disassembly and reassembly or manipulation of the two filters until the correct centring is reached.

The aim of this invention is to provide a lens unit for optical effects on projectors which overcomes the drawbacks of the prior art described above.

In particular, the aim of this invention is to provide a lens unit for optical effects on projectors which can be mounted quickly and precisely on the projector without the need for subsequent dismantling for its adjustment.

A further aim of this invention is to provide a lens unit for optical effects on projectors which is able to have a compact, modular structure which can increase the functionality and precision of optical filters in a reduced space inside the projector.

Said aims are fully achieved by a lens unit for optical effects on projectors according to the invention as characterised in the appended claims.

The main features of the invention will become more apparent from the following detailed description of a preferred, non-limiting embodiment, illustrated purely by way of example in the accompanying drawings, in which:
- Figure 1 is a side view, with some parts in cross section to better illustrate others, of a projector with a lens unit for optical effects, according to this invention;
- Figures 2 and 3 are exploded perspective views, with various components cut away to better illustrate others, of the projector with a filter unit for optical effects of Figure 1;
   Figure 4 is a perspective exploded view of a first lens unit of the previous drawings;
- Figure 5 is a cross section view of a portion of the first filter unit of Figure 4;
- Figure 6 is a perspective exploded view of a second lens unit of the previous drawings;
- Figures 7 and 8 show front and rear perspective views, respectively, of the first and second filter units superposed and centred relative to each other;
- Figure 9 is a cross section view of a portion of the first and second filter units of Figure 8.

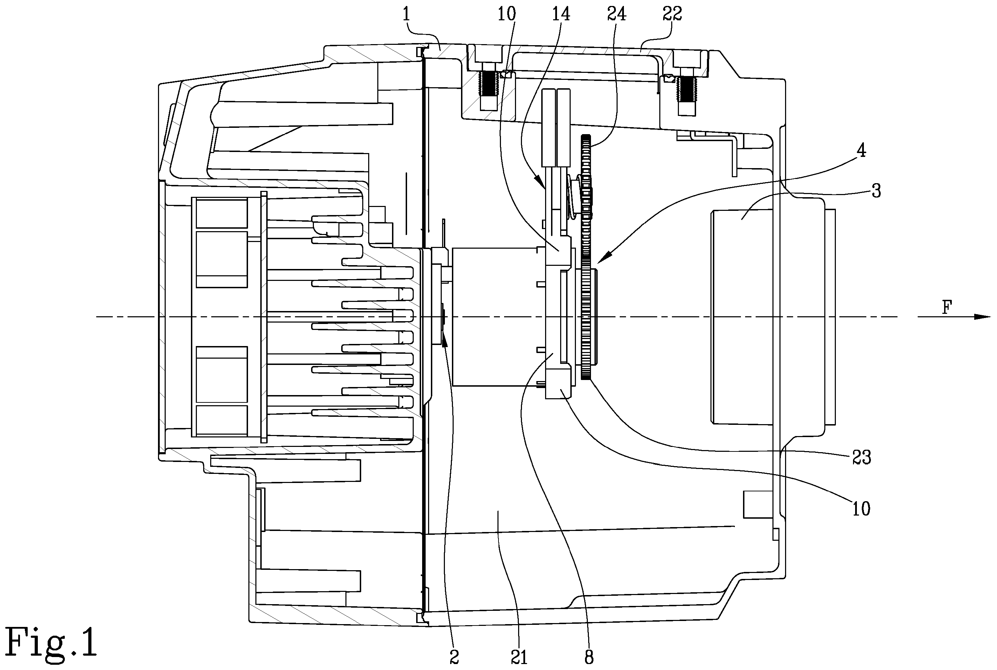

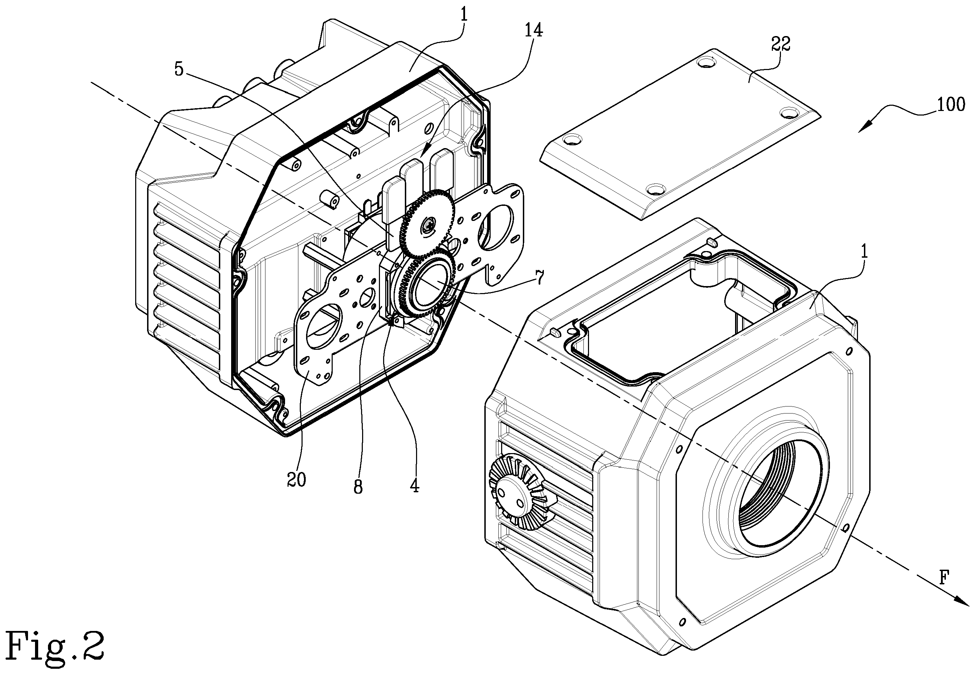

With reference to the accompanying drawings, and with particular reference to Figures 1 to 3, the lens unit for optical effects according to the invention may be applied on a projector, labelled 100 in its entirety, used for lighting areas dedicated to artistic events, such as theatre productions and concerts, or sports events, both outdoors and indoors.

As illustrated, the projector 100 comprises a projector body 1 (box-shaped body) having a first end and a second end to define a longitudinal axis of extension.

The projector 100 also comprises a light source 2 (for example, a LED unit), positioned inside the projector body 1 close to the first end and configured for generating a light beam F along a direction of emission and in a sense of emission extending from the first end to the second end of the projector body 1.

The projector 100 comprises an outlet lens 3 (zoom and/or focusing lens) of the light beam F positioned at the second end of the projector body 1.

Moreover, the projector 100 comprises at least a first optical filter unit 4 comprising a frame 5 having a seat 6 for housing a filter lens 7.

The frame 5 is housed inside the projector body 1 and interposed between the light source 2 and the outlet lens 3 so as to allow the light beam F to be intercepted by the filter lens 7 in a position centred relative to the light beam F.

Again as illustrated, the projector 100 comprises, inside the projector body 1, a body 8 for stable positioning of the at least a first filter unit 4.

The positioning body 8 is equipped with magnetic attraction means 9 configured to attract and retain the frame 5 of the first filter unit 4 inside the projector body 1 in the centred position.

In other words, the filter unit 4 may be quickly housed (and picked up) manually in the projector body 1 in the correct position through the resting on the positioning body 8 without the need for other fixing devices inside the projector body.

The accessibility to the inner part of the projector body 1 is given by the presence of a removable cover 22 located on the upper part of the projector body 1.

In light of this, the stable positioning body 8 and the first filter unit 4 have respective elements 10, 11 of mutual reference and coupling which are able to guide the first filter unit 4 in the centred position at the stable positioning by magnetic attraction of the first filter unit 4 against the stable positioning body 8.

It should be noted that the positioning body 8 is an annular element associated with inner walls of the projector body 1.

The annular element (the geometrical shape of which makes it possible to maintain a free zone of passage of the light beam F) has a plurality of magnetic units (a series of magnets with an annular shape fixed on the positioning body 8) forming the magnetic attraction means 9 positioned along a front annular surface of the body 8.

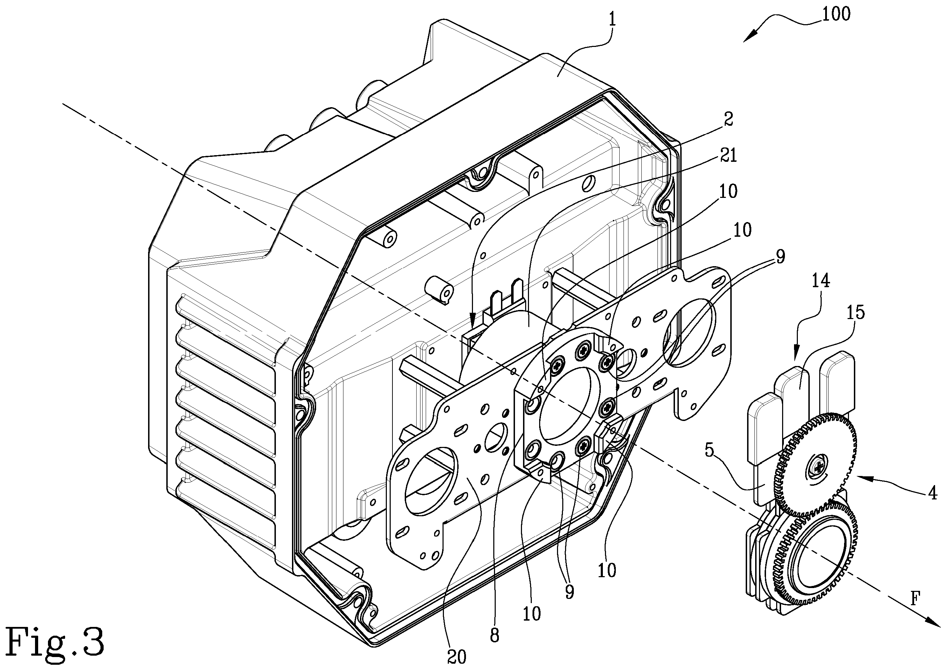

In light of this, see Figure 3, the positioning body 8 is housed on a flange 20 in turn associated with the inner walls of the projector body 1.

Preferably, the positioning body 8 is integral with a cylinder 21 enclosing other lenses (not illustrated) positioned between the positioning body 8 and the light source 2.

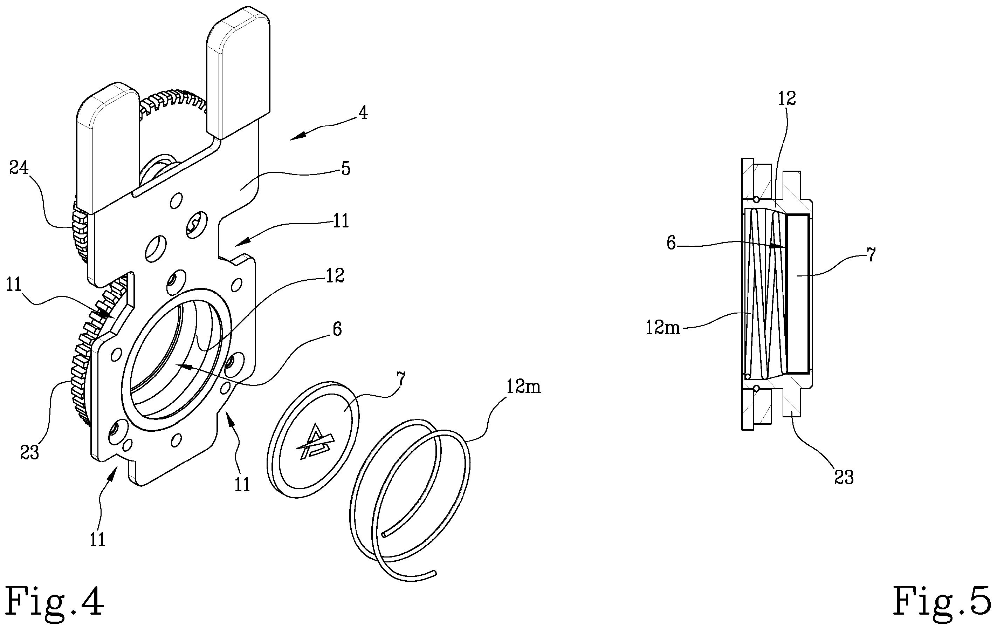

As also illustrated in Figures 4 and 5, the first filter unit 4 has the frame 5 formed by a first portion on which the seat 6 for housing the filter lens 7 is made and a second portion configured for its gripping and manipulating (for example, a gripping fork).

In light of this, the first portion of the frame 5 is obtained with ferromagnetic material so as to allow the coupling of the frame 5 to the stable positioning body 8.

Preferably, the entire first frame 5 is obtained with ferromagnetic material.

Preferably, the above-mentioned reference and coupling elements 10, 11 between the positioning body 8 and the frame 5 of the first filter unit 4 comprise at least one pair of enlargements 10 projecting parallel to the longitudinal axis of extension of the projector body 1 and towards its second end.

The enlargements (of the semi-circular protruding sectors) are formed along the outer perimeter of the stable positioning body 8.

The reference elements also comprise at least one pair of open slots 11 made on the frame 5 of the first filter unit 4 which can be coupled, by sliding, with the enlargements 10 until contact of the frame 5 with the positioning body 8.

It should be noted that the stable positioning body 8 has four enlargements 10 uniformly arranged around the positioning body 8, whilst the frame 5 of the first filter group 4 having four matching slots 11 made in pairs along corresponding side walls formed by the frame 5.

As illustrated in Figures 4 to 9, the frame 5 of the first filter group 4 comprises a flat elongate plate provided, in the first portion, with a circular opening in which is partly inserted a circular sleeve 12, which can be freely rotated and defining the seat 6 for the filter lens 7.

The filter lens 7 is held in the sleeve 12 by a spring 12m.

The circular sleeve 12 is associated, externally, with manual adjustment means 13 configured to allow the variation of the angular position of the filter lens 7 positioned inside the circular sleeve 12 with the first filter unit 4 mounted in the projector body 1.

The manual adjustment means 13 comprises a first gear wheel 23 associated with the sleeve 12 and meshed with a second gear wheel 24 rotatably constrained on the first frame 5 and reachable manually from the outside of the projector body 1 so as to allow the rotation of the sleeve 12 and hence the first filter lens 7.

According to the non-limiting example illustrated in Figure 4, the first lens 7 may have an image to be projected (gobo lens).

The projector 100 may comprise a second filter unit 14 comprising a second frame 15 having a seat 16 for housing a second filter lens 17.

In the case illustrated, by way of example, the second filter lens 17 is a coloured lens.

The second frame 15 is housed inside the projector body 1 and interposed between the light source 2 and the first filter unit 4.

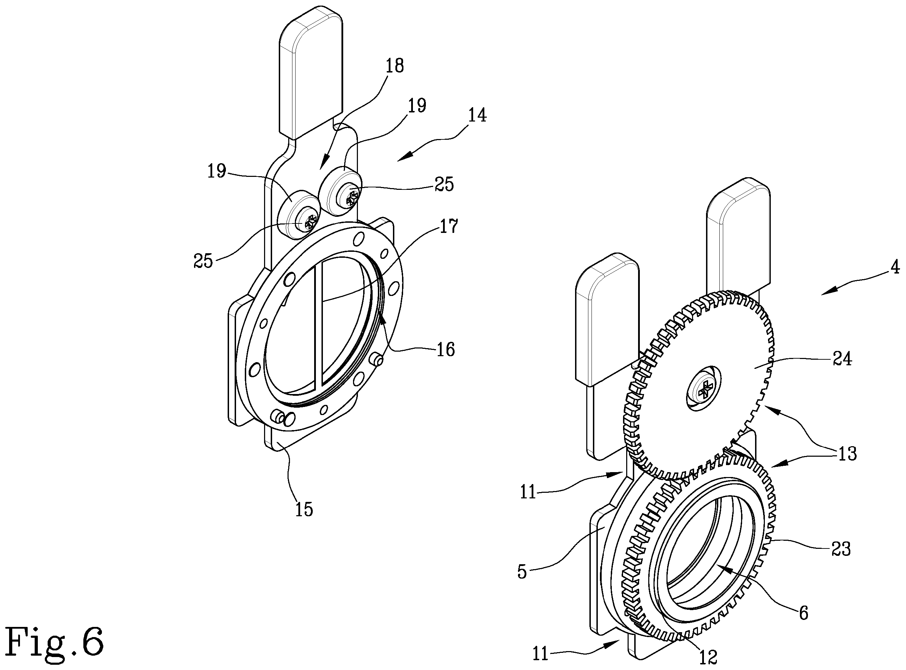

As illustrated in Figures 6 to 9, the second filter unit 14 has the second frame 15 formed by a first portion on which is made the seat 16 for housing the second filter lens 17 and a second portion configured for its gripping and manipulating (in this case formed by a single vertical gripping extension).

The second frame 15 also comprises a flat elongate sheet and has at least the first portion obtained with ferromagnetic material so as to allow the coupling of the second frame 15 to the stable positioning body 8.

The second frame 15 is preferably obtained in a single body and made from ferromagnetic material.

It should be noted that the second filter unit 14 has means 18 for joining and centring with the first filter unit 4.

In light of this, the joining and centring means 18 comprise two magnetic elements 19 (two magnets) configured to attract and retain the frame 5 of the first filter unit 5 in contact with the second filter unit 14 and with the respective lenses 7, 17 centred relative to each other.

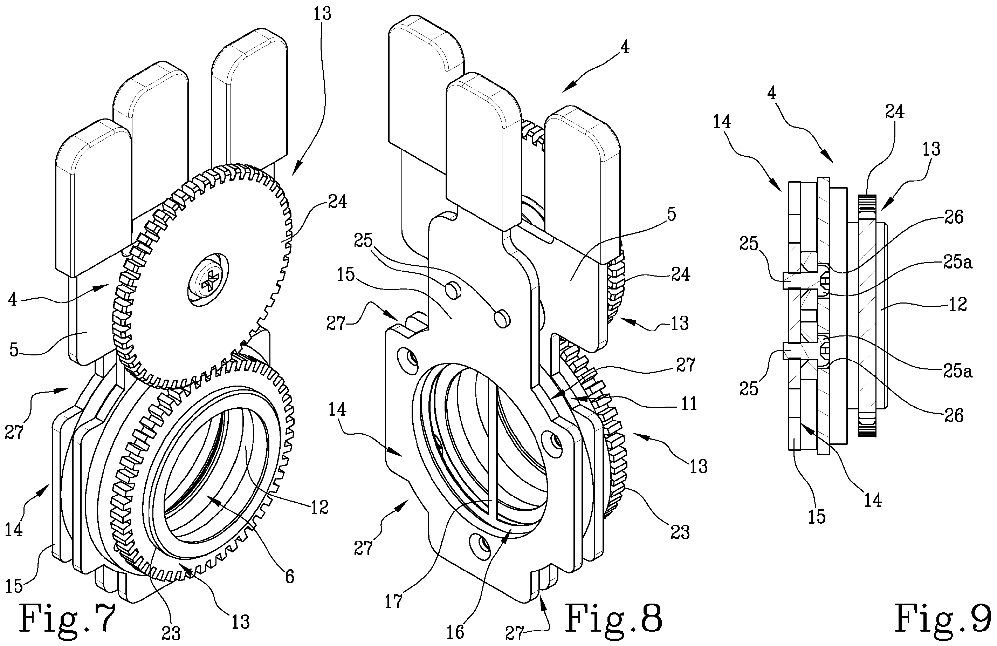

As illustrated in Figures 6 and 9, the two magnetic elements 19 of the second filter unit 14 are associated with the second portion of the second frame 15 by respective fixing screws 25 whose head 25a can be coupled in respective holes 26 present on the second portion of the first frame 5 of the first filter unit 4.

This coupling, made stable by the magnetic elements 19, ensures centring between the two lenses 7, 17.

It should be noted that the second frame 15 is equipped with four matching open slots 27 which can be coupled with the enlargements 10 of the positioning body 8 during housing in the projector body 1.

In this way, once the two filter units 4 and 14 have been coupled, it is possible to house them in a fast and secure manner inside the projector body 1 having the certainty that the two lenses are centred on each other and relative to the light beam F.

The preset aims are achieved thanks to this lens unit for optical effects.

The first filter unit (or primary holder) has adjustment means (by means of pair of gears) with which it is possible to obtain a manual adjustment by rotating the lens from the outside of the projector, without having to extract the filter unit and from the axis of the lens. In this way, it is possible to correct any rotation or indexing error in a short time.

The second filter unit, which may house a second lens, is structured to be coupled to the first filter unit by means of magnets.

The system for coupling the two units allows images, colours or both to be combined, always having the certainty of centring the lenses present.

This modularity of the components allows a large saving in the materials having a reduced internal size.

This modular system may be accessible through an inspection door located on the projector body, thus allowing the units to be extracted and assembled without having to mechanically remove the optical unit or the source and check simply that the projection is correct.

## Claims

1. A lens unit for optical effects which can be used on projectors (100) generating a light beam (F), comprising:
- a first optical filter unit (4) comprising a first frame (5) having a seat (6) for housing a first filter lens (7);
- a second optical filter unit (14) comprising a second frame (15) having a seat (16) for housing a second filter lens (17);
- joining and centring means (18) between the first filter unit (4) and the second filter unit (14); said joining and centring means (18) comprising at least two magnetic elements (19) associated with the second filter unit (14) and configured to attract and retain the frame (5) of the first filter unit (4) in contact with the second filter unit (14) and with the relative lenses (7, 17) centred on each other.

2. The lens unit according to claim 1, wherein the at least a first filter unit (4) has the first frame (5) formed by a first portion on which the seat (6) is made for housing the filter lens (7) and a second portion configured for its gripping and handling; the first frame (5) being obtained with ferromagnetic material so as to allow the coupling of the first frame (5) to the second frame (15) of the second filter unit (14).

3. The lens unit according to claim 1 or 2, wherein the second filter unit (14) has the second frame (15) formed by a first portion on which the seat (16) is made for housing the second filter lens (17) and a second portion configured for its gripping and handling; the second frame (15) being obtained with ferromagnetic material.

4. The lens unit according to any one of the preceding claims, wherein the joining and centring means (18) comprise the two magnetic elements (19) of the second filter unit (14) associated with the second frame (15) by means of respective fixing screws (25) the head (25a) of which being connectable, in use, in relative holes (26) made on the first frame (5) of the first filter unit (4).

5. The lens unit according to any one of the preceding claims, wherein the first frame (5) of the first filter unit (4) comprises an elongated flat plate provided, in the first portion, with a circular opening in which a circular sleeve (12) is partly inserted, freely rotatable and defining the seat (6) for the filter lens (7); the circular sleeve (12) being associated, externally, with manual adjustment members (13) configured to allow the variation of the angular position of the filter lens (7) located inside the circular sleeve (12).

6. The lens unit according to claim 5, wherein the manual adjustment means (13) comprises a first gear wheel (23) associated with the sleeve (12) and meshed with a second gear wheel (24) rotatably constrained on the first frame (5) and movable manually so as to allow the rotation of the sleeve (12) and hence the first filter lens (7).

7. The lens unit according to any one of the preceding claims, wherein the first frame (5) of the first filter unit (4) has four complementary open slots (11) formed in pairs along corresponding side walls formed by the frame (5).

8. The lens unit according to any one of the preceding claims, wherein the second frame (15) of the second filter unit (14) consists of an elongated flat plate and having four complementary slots (27) made in pairs along corresponding side walls formed by the second frame (15).

## Patentansprüche

1. Linseneinheit für optische Effekte, die an Projektoren (100) verwendet werden kann, die einen Lichtstrahl (F) erzeugen, umfassend:
- eine erste optische Filtereinheit (4), die einen ersten Rahmen (5) mit einer Aufnahme (6) zur Unterbringung einer ersten Filterlinse (7) umfasst;
- eine zweite optische Filtereinheit (14), die einen zweiten Rahmen (15) mit einer Aufnahme (16) zur Unterbringung einer zweiten Filterlinse (17) umfasst;
- Verbindungs- und Zentriermittel (18) zwischen der ersten Filtereinheit (4) und der zweiten Filtereinheit (14); wobei die Verbindungs- und Zentriermittel (18) mindestens zwei Magnetelemente (19) umfassen, die mit der zweiten Filtereinheit (14) assoziiert sind und dazu ausgelegt sind, den Rahmen (5) der ersten Filtereinheit (4) in Kontakt mit der zweiten Filtereinheit (14) und mit den relativen Linsen (7, 17), die aufeinander zentriert sind, anzuziehen und zu halten.

2. Linseneinheit nach Anspruch 1, wobei die mindestens eine erste Filtereinheit (4) den ersten Rahmen (5) aufweist, der durch einen ersten Abschnitt, an dem der Sitz (6) zur Unterbringung der Filterlinse (7) ausgebildet ist, und einen zweiten Abschnitt gebildet ist, der für sein Greifen und Handhaben ausgelegt ist; wobei der erste Rahmen (5) mit ferromagnetischem Material erhalten ist, um die Kopplung des ersten Rahmens (5) mit dem zweiten Rahmen (15) der zweiten Filtereinheit (14) zu ermöglichen.

3. Linseneinheit nach Anspruch 1 oder 2, wobei die zweite Filtereinheit (14) den zweiten Rahmen (15) aufweist, der durch einen ersten Abschnitt, an dem der Sitz (16) zur Unterbringung der zweiten Filterlinse (17) ausgebildet ist, und einen zweiten Abschnitt gebildet ist, der für sein Greifen und Handhaben ausgelegt ist; wobei der zweite Rahmen (15) mit ferromagnetischem Material erhalten ist.

4. Linseneinheit nach einem der vorhergehenden Ansprüche, wobei die Verbindungs- und Zentriermittel (18) die beiden Magnetelemente (19) der zweiten Filtereinheit (14) umfassen, die mit dem zweiten Rahmen (15) mittels jeweiliger Befestigungsschrauben (25) assoziiert sind, deren Kopf (25a) im Gebrauch in relativen Löchern (26) verbunden werden kann, die an dem ersten Rahmen (5) der ersten Filtereinheit (4) ausgebildet sind.

5. Linseneinheit nach einem der vorhergehenden Ansprüche, wobei der erste Rahmen (5) der ersten Filtereinheit (4) eine längliche flache Platte umfasst, die in dem ersten Abschnitt mit einer kreisförmigen Öffnung versehen ist, in die eine kreisförmige Hülse (12) teilweise eingesetzt ist, die frei drehbar ist und den Sitz (6) für die Filterlinse (7) definiert; wobei die kreisförmige Hülse (12) außen mit manuellen Einstellelementen (13) assoziiert ist, die so ausgelegt sind, dass sie die Variation der Winkelposition der Filterlinse (7), die sich innerhalb der kreisförmigen Hülse (12) befindet, ermöglichen.

6. Linseneinheit nach Anspruch 5, wobei das manuelle Einstellmittel (13) ein erstes Zahnrad (23) umfasst, das mit der Hülse (12) assoziiert ist und mit einem zweiten Zahnrad (24) kämmt, das drehbar an dem ersten Rahmen (5) festgespannt und manuell beweglich ist, um die Drehung der Hülse (12) und damit der ersten Filterlinse (7) zu ermöglichen.

7. Linseneinheit nach einem der vorhergehenden Ansprüche, wobei der erste Rahmen (5) der ersten Filtereinheit (4) vier komplementäre offene Schlitze (11) aufweist, die paarweise entlang entsprechender Seitenwände gebildet sind, die durch den Rahmen (5) gebildet sind.

8. Linseneinheit nach einem der vorhergehenden Ansprüche, wobei der zweite Rahmen (15) der zweiten Filtereinheit (14) aus einer länglichen flachen Platte besteht und vier komplementäre Schlitze (27) aufweist, die paarweise entlang entsprechender Seitenwände ausgebildet sind, die durch den zweiten Rahmen (15) gebildet sind.

## Revendications

1. Unité de lentille pour effets optiques pouvant être utilisée sur des projecteurs (100) générant un faisceau lumineux (F), comprenant :
- une première unité de filtre optique (4) comprenant un premier cadre (5) comportant un siège (6) pour loger une première lentille filtrante (7) ;
- une seconde unité de filtre optique (14) comprenant un second cadre (15) comportant un siège (16) pour loger une seconde lentille filtrante (17) ;
- des moyens d'assemblage et de centrage (18) entre la première unité de filtre (4) et la seconde unité de filtre (14) ; lesdits moyens d'assemblage et de centrage (18) comprenant au moins deux éléments magnétiques (19) associés à la seconde unité de filtre (14) et configurés pour attirer et retenir le cadre (5) de la première unité de filtre (4) en contact avec la seconde unité de filtre (14) et avec les lentilles (7, 17) respectives centrées l'une sur l'autre.

2. Unité de lentille selon la revendication 1, dans laquelle l'au moins une première unité de filtre (4) comporte le premier cadre (5) formé par une première partie sur laquelle est réalisé le siège (6) destiné à loger la lentille filtrante (7) et une seconde partie configurée pour sa préhension et sa manipulation ; le premier cadre (5) étant obtenu avec un matériau ferromagnétique de manière à permettre le couplage du premier cadre (5) au second cadre (15) de la seconde unité de filtre (14).

3. Unité de lentille selon la revendication 1 ou 2, dans laquelle la seconde unité de filtre (14) comporte le second cadre (15) formé par une première partie sur laquelle est réalisé le siège (16) destiné à loger la seconde lentille filtrante (17) et une seconde partie configurée pour sa préhension et sa manipulation ; le second cadre (15) étant obtenu avec un matériau ferromagnétique.

4. Unité de lentille selon l'une quelconque des revendications précédentes, dans laquelle les moyens d'assemblage et de centrage (18) comprennent les deux éléments magnétiques (19) de la seconde unité de filtre (14) associés au second cadre (15) au moyen de vis de fixation (25) respectives dont la tête (25a) peut être raccordée, lors de l'utilisation, dans des trous (26) correspondants réalisés sur le premier cadre (5) de la première unité de filtre (4).

5. Unité de lentille selon l'une quelconque des revendications précédentes, dans laquelle le premier cadre (5) de la première unité de filtre (4) comprend une plaque plate allongée pourvue, dans la première partie, d'une ouverture circulaire dans laquelle un manchon circulaire (12) est partiellement inséré, librement rotatif et définissant le siège (6) pour la lentille filtrante (7) ; le manchon circulaire (12) étant associé, à l'extérieur, à des éléments de réglage manuel (13) configurés pour permettre la variation de la position angulaire de la lentille filtrante (7) située à l'intérieur du manchon circulaire (12).

6. Unité de lentille selon la revendication 5, dans laquelle les moyens de réglage manuel (13) comprennent une première roue dentée (23) associée au manchon (12) et engrenée à une seconde roue dentée (24) contrainte en rotation sur le premier cadre (5) et mobile manuellement de manière à permettre la rotation du manchon (12) et donc de la première lentille filtrante (7).

7. Unité de lentille selon l'une quelconque des revendications précédentes, dans laquelle le premier cadre (5) de la première unité de filtre (4) comporte quatre fentes ouvertes complémentaires (11) formées par paires le long des parois latérales correspondantes formées par le cadre (5).

8. Unité de lentille selon l'une quelconque des revendications précédentes, dans laquelle le second cadre (15) de la seconde unité de filtre (14) est constitué d'une plaque plate allongée et comporte quatre fentes complémentaires (27) formées par paires le long des parois latérales correspondantes formées par le second cadre (15).
